(19)

Europäisches
Patentamt
European
Patent Office
Office européen
des brevets

(11) **EP 2 284 478 A1**

(12) **EUROPEAN PATENT APPLICATION**

(43) Date of publication:
**16.02.2011 Bulletin 2011/07**

(51) Int Cl.:
**G01B 7/14** *(2006.01)*

(21) Application number: **10251315.7**

(22) Date of filing: **23.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **31.07.2009 GB 0913461**

(71) Applicant: **Oxford RF Sensors Ltd
Oxford OX25 3QW (GB)**

(72) Inventors:
• **Harrison, Martin Roy
  Brackley, Northants. NN13 5SF (GB)**
• **Wherritt, Peter
  Abingdon, Oxford OX13 5BE (GB)**
• **Gregg, John Francis
  Oxford OX2 7SG (GB)**

(74) Representative: **Frost, Alex John
  Boult Wade Tennant
  Verulam Gardens
  70 Gray's Inn Road
  London WC1X 8BT (GB)**

(54) **Proximity sensor**

(57)    Proximity sensor 10 for detecting the proximity of a conductive component 40 comprising an oscillator having electrical properties and arranged to provide an oscillating signal. First coil 20 arranged to receive the oscillating signal and alter the electrical properties of the oscillator by a first variation in response to the proximity of the conductive component to the proximity sensor. Second coil 30 arranged to receive the oscillating signal and alter the electrical properties of the oscillator by a second variation in response to the proximity of the conductive component 40 to the proximity sensor, wherein the first coil 20 and the second coil 30 cause a different variation to the electrical properties of the oscillator for the same proximity of the conductive component 40 to the proximity sensor 10. Proximity output arranged to provide a proximity signal which varies in dependence upon the proximity of the conductive component 40 to the proximity sensor and based on a comparison of the first variation to the second variation.

Fig. 1

EP 2 284 478 A1

**Description**

**Field of the Invention**

The present invention relates to a proximity sensor and in particular to a proximity sensor for sensing the gap between a moving part and a stationary part such as, for example, a turbine blade and engine casing.

**Background of the Invention**

One source of inefficiency in both Power Generation and Aerospace Gas Turbines is the gap between the tips of rotating blades in the turbine sections and the engine or turbine casing. Gases that escape through the gap represent lost energy, and various methods are used to reduce the gap and minimize this energy loss. Complex tip shapes on both shrouded and un-shrouded blades are used to direct the gas flow, and open-loop control systems make use of cooler air bled form compressor stages to shrink the turbine casing. However, a further goal is a closed-loop control system where the gap is measured by a sensor and the turbine casing is actively controlled by some case shrinking mechanism.

Therefore, there is required a reliable sensor probe that can measure turbine tip clearance (TTC) distance with a required accuracy, while surviving the extreme conditions encountered in turbine sections. Calibration of such sensors is difficult.

Capacitive and optical sensors may be used for both static and flight-testing engine development, and the data collected is used to develop the model for open-loop TTC control. However, both of these techniques are very susceptible to contamination by the combustion products of the engine.

Inductive (eddy current) sensors have been proposed to overcome this contamination problem, but there are a number of practical challenges that have to be solved, particularly in Aerospace Gas Turbines. While the sensor probe is mounted in or on the turbine casing, the electronics has to be mounted in a much cooler environment, typically on the engine fan case. On a large engine, this can mean routing signals along cables up to 10 metres long. This attenuates the signals, and the large temperature gradients along the cable and high level of vibration can introduce noise.

The problem is further complicated by axial movement of the turbine shaft especially as engine thrust changes. The section of turbine tip presented to the sensor may therefore vary depending upon thrust conditions. If the sensor response is susceptible to the mass of material, the derived tip clearance distance will have to be corrected for any axial shift. Present sensors cannot determine tip clearance distance without taking into account the mass of blade material passing over the probe.

A further complication may be caused by a change in the temperature of the turbine tips, which causes a change in the electrical resistivity of the tip material. If the sensor response is susceptible to changes in the electrical resistivity of the material, the derived tip clearance distance will require correction for the change in the blade temperature.

As well as turbine blade tip measurements, gap sensors are also required for other applications.

US 4,563,643 describes a turbine eddy current proximity sensor having two coils wound around a coil support within a housing. The second coil is used for temperature compensation. However, a second sensor is required to detect axial movement of a turbine rotor.

Therefore, there is required a proximity sensor that overcomes these problems.

**Summary of the Invention**

In accordance with a first aspect of the present invention there is provided a proximity sensor for detecting the proximity of a conductive component:

an oscillator having electrical properties and arranged to provide an oscillating signal;
a first coil arranged to receive the oscillating signal and alter the electrical properties of the oscillator by a first variation in response to the proximity of the conductive component to the proximity sensor;
a second coil arranged to receive the oscillating signal and alter the electrical properties of the oscillator by a second variation in response to the proximity of the conductive component to the proximity sensor, wherein the first coil and the second coil cause a different variation to the electrical properties of the oscillator for the same proximity of the conductive component to the proximity sensor; and
a proximity output arranged to provide a proximity signal which varies in dependence upon the proximity of the conductive component to the proximity sensor and based on a comparison of the first variation to the second variation. Therefore, the conditions that may affect the accuracy or reliability of proximity detection such as temperature changes and lateral shift, may be compensated for without requiring additional calibration or further sensors.

Optionally, the oscillating signal may alternate between the first coil and the second coil. In other words, a single oscillator may alternately drive each coil with a changeover occurring at a sufficient rate dependent on the time that the conductive component is being detected or seen by the sensor. For a moving conductive component the changeover must occur fast enough for an effect to be felt by both coils before the conductive component moves off or out of detection range. Typically, the closest point or smallest separation is of interest.

Optionally, the proximity sensor may further comprise a multiplexer arranged to provide the first coil and the second coil with the oscillating signal from the oscillator. Therefore, the multiplexer may apply the oscillating signal to each coil at intervals and may also allow or enable sampling of the electrical properties of the oscillator to be synchronised with each coil.

Optionally, the coils may be arranged co-axially. This may reduce sensor size.

Optionally, the coils may be arranged side-by-side. This may improve sensitivity.

Optionally, the coils may be arranged to be located at a different distance from the conductive component in use. In other words, one coil may be closer to the conductive component when the proximity of the conductive component is being sensed. For instance, where there is a face of the proximity sensor facing a conductive component one coil may be located closer to this face.

Optionally, the first and second coils may have a shape selected from the group consisting of: circular, non-circular, elliptical and rectangular.

Optionally, the coils have different diameters. These variations provide a different response with the conductive component at the same position or proximity to the sensor.

Optionally, the electrical properties of the oscillator are selected from the group consisting of: frequency, resonance frequency, amplitude, phase and quality factor. Other electrical properties may be used.

Optionally, the oscillator may be a Robinson oscillator. Other oscillators or marginal oscillators may be used.

Optionally, the proximity output may be further arranged to provide the proximity signal based on the ratio of the first variation and the second variation. For example, the proximity may be proportional to a ratio of frequency shifts of the oscillator or of the resonance frequency of the oscillator when the conductive component is being detected or nearby. The actual proximity in millimetres, for example, may be determined from a pre-prepared look-up table or other calibration technique.

Optionally, the electrical properties of the oscillator is frequency and the proximity signal may be based on the ratio of a frequency shift of the oscillator signal due to the first coil and the frequency shift of the oscillator signal due to the second coil. Alternatively, the frequency may be resonance frequency of the oscillator.

Optionally, the oscillating frequency is above 1MHz.

Optionally, the oscillator may further comprise a temperature output signal derived from the amplitude of the oscillating signal, which varies in dependence upon a change in electrical properties of the oscillator. This temperature output may be in addition to the proximity output.

Optionally, the oscillator further comprises a temperature output signal derived from a ratio of the amplitude of the oscillator signal and a variation in frequency of the oscillator signal when detecting the proximity of the conductive component.

Optionally, the proximity sensor may further comprise an axial shift output signal indicating a lateral translation of the conductive component, i.e. in a direction perpendicular to the detected proximity, the axial shift output signal may be based upon a change in frequency of the oscillating signal. Therefore, as well as proximity, the proximity sensor may detect alignment, especially of a rotating device such as a turbine blade, for example.

Optionally, the proximity sensor may be used with a conductive component having two protrusions facing the proximity sensor in use, and the proximity sensor may further comprise an axial shift output signal indicating a lateral translation of the conductive component, the axial shift output signal may be based upon the relative amplitudes of the oscillating signal sampled when each protrusion passes the proximity sensor or passes at a closest point. This variation may be used to sense the proximity of particularly shaped rotor blades.

It should be noted that any feature described above may be used with any particular aspect or embodiment of the invention.

## Brief description of the Figures

The present invention may be put into practice in a number of ways and embodiments will now be described by way of example only and with reference to the accompanying drawings, in which:

FIG. 1 shows a schematic diagram of a proximity sensor having two coils, given by way of example only;
FIG. 2 shows a further example proximity sensor having two coils in a different configuration to that shown in Fig. 1;
FIG. 3 shows a further example of proximity sensor having two coils in yet a further alternative configuration;
FIG. 4 shows a graphical representation of results acquired using the proximity sensor of Fig. 1 showing frequency shift against proximity; and
FIG. 5 shows a graphical representation of further results acquired using the proximity sensor of Fig. 1.

It should be noted that the figures are illustrated for simplicity and are not necessarily drawn to scale.

**Detailed description of the preferred embodiments**

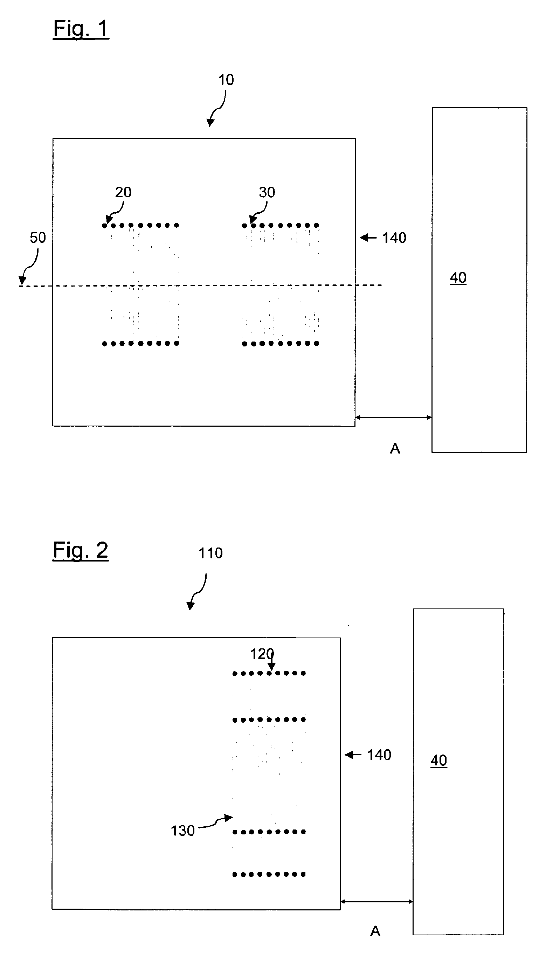

Fig. 1 shows a schematic diagram of components of a proximity sensor 10. Not all components are shown in this figure. A conductive component 40 is separated from the proximity sensor 10 by distance A. An oscillator (not shown in this figure) having particular electrical properties including oscillation frequency, amplitude, phase and quality factor (Q) generates an oscillating signal arranged to drive a first coil 20 and a second coil 30. Therefore, the first coil 20 and the second coil 30 may each generate an electromagnetic field when they receive the oscillating signal. The conductive component 40 may be a turbine blade arranged to pass the proximity sensor 10 at intervals, for instance. The conductive component may also be static or move slowly.

The conductive component 40 interacts with the electromagnetic field generated by each coil and this interaction depends on its proximity to the proximity sensor 10. For instance, eddy currents may be induced in the conductive component and therefore provide an energy loss mechanism that alters the electrical properties of the oscillator. In particular, the proximity of the conductive component 40 may change the frequency of the oscillator.

The first coil 20 and the second coil 30 may be arranged such that they alter the electrical properties of the oscillator in a different way with the conductive component 40 at a particular location relative to the proximity sensor 10. Fig. 1 shows example first and second coils 20, 30 as similar sized coils in a coaxial configuration but located with a different separation to a face 140 of the proximity sensor 10 facing the conductive component 40. In this example configuration, the first coil 20 will vary the electrical properties of the oscillator by a smaller amount as it is further from the conductive component 40. This difference in variation may be used to compensate for displacement (axial shift) or other errors.

In a particular example, the proximity sensor 10 may function as a susceptibility sensor to measure turbine blade tip separation from a turbine or engine casing. The proximity sensor 10 may be located in or on the turbine or engine casing such that the turbine blades pass it at intervals. In this particular example, electromagnetic radiation in the MHz band may be used to measure a blade tip clearance gap. However, other frequencies may be used depending on turbine blade speed, number or rate of rotation. The proximity sensor 10 may be self-validating and capable of measuring the clearance gap and substantially compensate for any axial shift of the turbine blades or changes in the blade temperature. By processing the signals drawn from the oscillator in further alternative ways, the proximity sensor 10 may also be capable of determining an axial shift of the turbine rotor and turbine blade tip temperature.

The proximity sensor 10 has the form of a probe formed from the two coils 20, 30 of wire that may be driven in a multiplexing mode by a single Robinson oscillator. The two coils 20, 30 provide a different response to changes in the blade tip clearance distance A. For example, the coils 10, 20 may have the same diameter but be mounted at a different distance from the tip of the probe, as shown in Fig. 1.

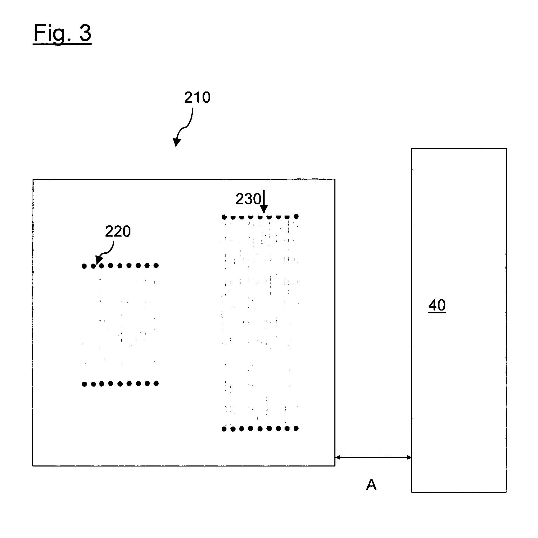

Figs. 2 and 3 show alternative configurations with similar components having the same reference numerals. As shown Fig. 2, the coils 120, 130 may have different diameters but be mounted at the same distance from the tip or face 140 of the probe. Fig. 3 shows a further alternative embodiment in which the coils 220, 230 may differ in both of these parameters. The two coils 20, 30 may be mounted side-by-side in the proximity sensor 10. However, the volume of the probe may be reduced if they are mounted coaxially as shown Figs. 1, 2 and 3.

The two coils 20, 30 may be circular in shape when viewed along an axis 50 of the proximity sensor 10. Alternatively, the coils 20, 30 may be elongated so that the coils become elliptical or even approaching rectangular in shape. Non-circular coils may offer increased sensitivity with certain blade tip shapes or for use with other conductive components 40.

Each coil may be separately influenced by the presence of the blade tip or conductive component 40, which modulates both the frequency and amplitude of the oscillator. Electronic circuitry (not shown in the figures) may determine the change of oscillator frequency and amplitude caused by the blade tip or conductive component 40 by subtracting a baseline signal acquired when the blade tip 40 is not in the field of view of either coil. These frequency and amplitude shifts may be processed in a number of different ways to provide the desired measurements and self-validating characteristics. Dedicated circuitry or computer processing may be used to analyse these signals.

For example, the ratio of frequency shifts may be used to determine the clearance distance A. For coils that have different diameters, or lie at different positions along the proximity sensor axis 50, the variation of the frequency shift with conductive component 40 clearance distance A may be different for each coil 20, 30.

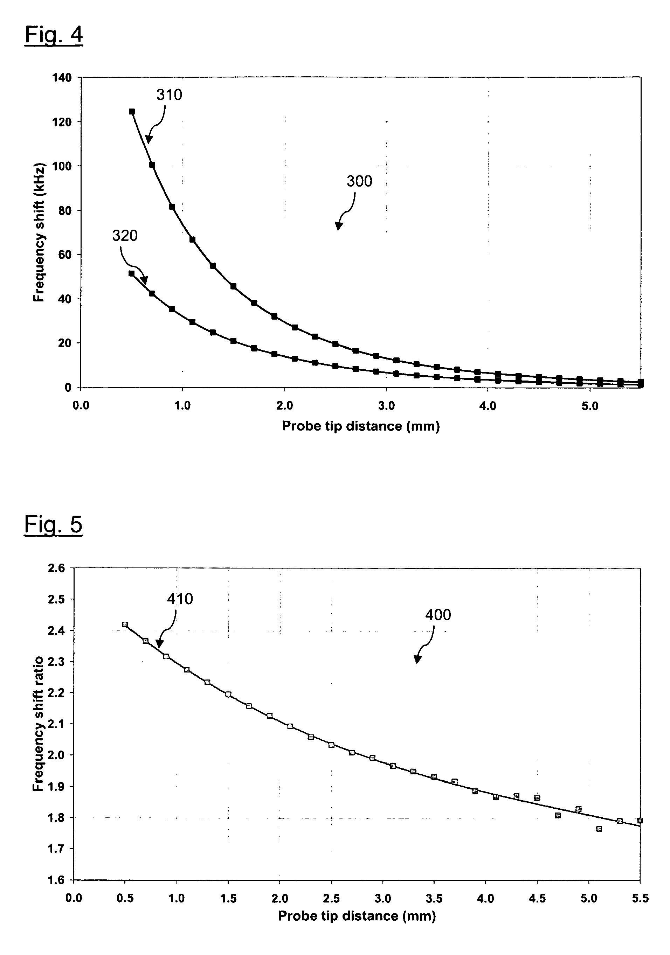

Fig. 4 shows an example set of results 300 in graphical form for measured frequency shifts recorded with the coil arrangement shown in Fig. 1. Fig. 5 shows in graphical form a graph 400 showing the ratio of the frequency shifts of the results 300 shown in Fig. 4 as a function of the target or clearance distance A. This ratio is plotted as a line 410.

The ratio of the frequency shifts may be used as a measure of the target clearance distance A that is substantially independent of changes in the properties of the target or conductive component 40. This independence may be explained as follows. The oscillator may provide an oscillating signal (for example in the form of a radio frequency, RF, current) through coil 20 to generate a RF magnetic field that impinges upon the blade tip or conductive component 40 at a distance D from the coil 20. The RF magnetic field induces an eddy current in the surface of the blade tip or conductive component 40, and the eddy current in turn produces a magnetic field that impinges back upon coil 20.

Therefore, the magnetic field produced by the coil 20, 30 may be reduced and this may be equivalent to a decrease in the coils' inductance. The decrease in the inductance of the coil of the oscillator, which may be a tank circuit, causes a parallel increase in the resonance frequency of the oscillator circuit, and this change in frequency can be detected and measured with demodulation circuitry (not shown in the figures), for example.

If we define $\Delta f_1$ as the change in the oscillator frequency caused by the presence of the conductive component 40 or blade tip, we can write

$$\Delta f_1 = a_1 \ . \ b \ . k_1(D) \hspace{3cm} \text{Equation 1}$$

where $a_1$ is a proportionality constant determined by the geometry and properties the particular coil 30 (each coil may have a different geometry and other properties and so may have a different proportionality constant). Features or properties that may affect this proportionality constant include radius and number of turns, etc. b is a proportionality constant determined by the geometry and properties of the conductive component 40 or blade tip (the tip width, electrical resistivity etc). $k_1(D)$ is a function describing how the magnitude of the frequency shift falls off with increasing distance D between the coil and the blade tip. An example of this is relationship is shown as curve 310 in Fig. 4. Therefore, the frequency shift caused by the presence of a conductive component 40 or a blade tip is determined by the product of three factors: one related to the geometry and properties of a particular coil 30, one related to the geometry and properties of the conductive component 40 and one dependent on the distance or separation D of conductive component 40 and coil 30.

In the example configuration shown in Fig. 1, a second coil 20 is located at a greater distance from the conductive component, i.e. D+d. We now have

$$\Delta f_2 = a_2 \ . \ b. \ k_2(D+d) \hspace{3cm} \text{Equation 2}$$

where $a_2$ is a proportionality constant determined by the geometry of coil 20 and b is a proportionality constant determined by the geometry and properties of the conductive component 40. $K_2(D+d)$ is a function describing how the magnitude of the frequency shift falls off with increasing distance D+d between the coil 20 and the conductive component 40. This relationship is shown as example curve 320 in Fig. 4. In this particular example, coil 20 and coil 30 have the same geometry. Therefore, in this case $a_1$ is equal to $a_2$ and function $k_1$ is equal to function $k_2$. However, such equalities are not required in general.

Since the properties of the conductive component 40 have not changed when the oscillator was switched from coil 20 to coil 30, the factor b remains constant and can be eliminated by taking the ratio of the frequency shifts, as shown in equation 3.

$$\Delta f_1 \ / \ \Delta f_2 = (a_1 \ . \ k_1(D)) \ / \ (a_2 \ . \ k_2(D+d)) \hspace{1.5cm} \text{Equation 3}$$

The ratio of the frequency shifts may therefore be determined by the geometry of the two coils 20, 30 and their separation from the conductive component and not by the properties of the conductive component 40. This means that the frequency shift ratio will not change as the cross-section of the conductive component 40 passing the coils changes due to axial or sideways shift, for instance. Furthermore, this ratio will not change as the electrical properties of the conductive component change due to a change of temperature, for example. In this example, the two coils 20, 30 are driven by a single oscillator. Therefore, any changes in the characteristics of the oscillator or cabling used to connect the oscillator to the proximity sensor may also be cancelled out by taking the ratio of the frequency shifts.

The proximity sensor 10 may be calibrated after manufacture using a test target or standard conductive component 40 that does not have to be identical to the conductive component 40 encountered in use. For instance, where the device is to be used with turbine blade tip clearance measurements, the proximity sensor may be calibrated with a test turbine blade. The derived calibration curve relating the frequency shift ratio to the clearance distance A (e.g. plot 400 of Fig. 5) may then equally apply to different geometry conductive components 40, e.g. turbine blades with different tip profiles.

The ratio of the frequency shifts therefore provides a more certain measure of clearance distance A. By combining this information with the signals returned by the individual coils (for example, the coil 30 closest to the conductive component 40 as shown in Fig. 1 as this returns larger frequency and amplitude shifts), other information relating to the turbine blade system can also be derived.

In the example context of a turbine blade tip detecting proximity sensor 40, the degree of axial shift may be determined from the change in the frequency shift as the blade tip moves past the face 140 of the proximity sensor 40. Un-shrouded turbine blades may have a complex tip shape comprising a leading edge and a trailing edge with a hollowed out region between them. This blade tip shape may produce a characteristic twin peak signal, i.e. altering the frequency of the oscillator as each edge passes the proximity sensor 10. The relative strength of these peaks and the interval between them may be used to derive a measurement of axial shift using a look up table of profiles recorded during a separate calibration procedure.

Changes to the sensitivity of components within the proximity sensor and associated electronics due to component drift and ageing may require correction or calibration. Preferably, the derived tip clearance distance A should not be affected by changes in the temperature of the electronics or changes in the properties of the connecting cables, etc, for example.

The ratio of the amplitude and frequency shifts returned by each coil 20, 30 may be used to provide a method of determining the blade tip temperature (or temperature of any conductive component 40) since temperature changes alter the electrical resistivity of the material under test. The frequency shift at a given clearance distance A should not change to any appreciable extent as the blade gets hot - a small change may occur due to the increase in the electrical skin depth for RF penetrations, which varies as the square root of the electrical resistivity. Amplitude changes may also be proportional to resistivity and so may also provide an indication of temperature. Therefore, the ratio of frequency to amplitude provides a measure of resistivity from which temperature may be derived.

By mounting two coils 20, 30 inside a probe and driving them in a multiplexed mode by a single oscillator, a self-validating sensor may be provided that may measure the clearance gap A irrespective of axial shift of a conductive component, such as a turbine blade or changes in the conductive component's 40 temperature.

As will be appreciated by the skilled person, details of the above embodiment may be varied without departing from the scope of the present invention, as defined by the appended claims.

For example, separate oscillators may drive each coil or the single oscillator may drive both coils 20, 30 at the same time, provided that the electrical effects or changes brought about by each coil encountering a conductive component 40 may be separated or otherwise compared.

The oscillator may be a marginal oscillator such as for instance, a Robinson oscillator.

Many combinations, modifications, or alterations to the features of the above embodiments will be readily apparent to the skilled person and are intended to form part of the invention.

**Claims**

1. A proximity sensor for detecting the proximity of a conductive component comprising:

an oscillator having electrical properties and arranged to provide an oscillating signal;
a first coil arranged to receive the oscillating signal and alter the electrical properties of the oscillator by a first variation in response to the proximity of the conductive component to the proximity sensor;
a second coil arranged to receive the oscillating signal and alter the electrical properties of the oscillator by a second variation in response to the proximity of the conductive component to the proximity sensor, wherein the first coil and the second coil cause a different variation to the electrical properties of the oscillator for the same proximity of the conductive component to the proximity sensor; and
a proximity output arranged to provide a proximity signal which varies in dependence upon the proximity of the conductive component to the proximity sensor and based on a comparison of the first variation to the second variation.

2. The proximity sensor of claim 1, wherein the oscillating signal alternates between the first coil and the second coil.

3. The proximity sensor of claim 1 or claim 2 further comprising a multiplexer arranged to provide the first coil and the second coil with the oscillating signal from the oscillator.

4. The proximity sensor according to any previous claim, wherein the coils are arranged co-axially.

5. The proximity sensor according to any previous claim, wherein the coils are arranged side-by-side.

6. The proximity sensor according to any previous claim, wherein the coils are arranged to be located at a different distance from the conductive component in use.

7. The proximity sensor according to any previous claim, wherein the first and second coils have a shape selected from the group consisting of: circular, non-circular, elliptical and rectangular.

8. The proximity sensor according to any previous claim, wherein the coils have different diameters.

9. The proximity sensor according to any previous claim, wherein the electrical properties of the oscillator are selected from the group consisting of: frequency, resonance frequency, amplitude, phase and quality factor.

10. The proximity sensor according to any previous claim, wherein the oscillator is a Robinson oscillator.

11. The proximity sensor according to any previous claim, wherein the proximity output is further arranged to provide the proximity signal based on the ratio of the first variation and the second variation.

12. The proximity sensor of claim 12, wherein the electrical properties of the oscillator is frequency and the proximity signal is based on the ratio of a frequency shift of the oscillator signal due to the first coil and the frequency shift of the oscillator signal due to the second coil.

13. The proximity sensor according to any previous claim, wherein oscillating frequency is above 1MHz.

14. The proximity sensor according to any previous claim, wherein the oscillator further comprises a temperature output signal derived from the amplitude of the oscillating signal, which varies in dependence upon a change in electrical properties of the oscillator.

15. The proximity sensor according to any previous claim, wherein the oscillator further comprises a temperature output signal derived from a ratio of the amplitude of the oscillator signal and a variation in frequency of the oscillator signal when detecting the proximity of the conductive component.

16. The proximity sensor according to any previous claim, further comprising an axial shift output signal indicating a lateral translation of the conductive component, the axial shift output signal based upon a change in frequency of the oscillating signal.

17. The proximity sensor according to any previous claim and for use with a conductive component having two protrusions facing the proximity sensor in use, further comprising an axial shift output signal indicating a lateral translation of the conductive component, the axial shift output signal based upon the relative amplitudes of the oscillating signal sampled when each protrusion passes the proximity sensor.

Fig. 1

Fig. 2

Fig. 3

## Fig. 4

## Fig. 5

**EUROPEAN SEARCH REPORT**

Application Number

EP 10 25 1315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/072820 A1 (GROMMER WERNER [DE] ET AL) 19 March 2009 (2009-03-19) | 1-7,9,14 | INV.<br>G01B7/14 |
| Y | * claims 1,7,19; figures 1,2 * | 1-17 | |
| X | WO 2009/034305 A2 (OXFORD RF SENSORS LTD [GB]; GREGG JOHN FRANCIS [GB]; KARENOWSKA ALEXY) 19 March 2009 (2009-03-19) | 1 | |
| Y | * the whole document * | 1-17 | |
| X | US 2009/021248 A1 (BERNARD JACQUES [FR] ET AL) 22 January 2009 (2009-01-22) | 1 | |
| Y | * the whole document * | 1-17 | |
| X | US 2003/085700 A1 (MOMOSE SHOGO [JP]) 8 May 2003 (2003-05-08) | 1 | |
| Y | * the whole document * | 1-17 | |
| X | US 4 816 759 A (AMES GREGORY H [US] ET AL) 28 March 1989 (1989-03-28) | 1 | |
| Y | * the whole document * | 1-17 | TECHNICAL FIELDS SEARCHED (IPC) |
| X | EP 0 305 013 A2 (CATENA PRODUCT DEV BV [NL]) 1 March 1989 (1989-03-01) | 1 | G01B |
| Y | * the whole document * | 1-17 | |
| X | GB 1 066 057 A (ASS ELECT IND) 19 April 1967 (1967-04-19) | 1 | |
| Y | * the whole document * | 1-17 | |

The present search report has been drawn up for all claims

| Place of search | Date of completion of the search | Examiner |
|---|---|---|
| Munich | 5 November 2010 | Grand, Jean-Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 25 1315

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2010

| Patent document cited in search report | | Publication date | Patent family member(s) | | Publication date |
|---|---|---|---|---|---|
| US 2009072820 | A1 | 19-03-2009 | AT | 428099 T | 15-04-2009 |
| | | | CN | 101072980 A | 14-11-2007 |
| | | | DE | 102004049753 B3 | 13-04-2006 |
| | | | EP | 1797394 A1 | 20-06-2007 |
| | | | WO | 2006040267 A1 | 20-04-2006 |
| WO 2009034305 | A2 | 19-03-2009 | EP | 2201221 A2 | 30-06-2010 |
| | | | US | 2010213929 A1 | 26-08-2010 |
| US 2009021248 | A1 | 22-01-2009 | CN | 101387709 A | 18-03-2009 |
| | | | EP | 2017652 A1 | 21-01-2009 |
| | | | FR | 2919072 A1 | 23-01-2009 |
| US 2003085700 | A1 | 08-05-2003 | JP | 2003130605 A | 08-05-2003 |
| US 4816759 | A | 28-03-1989 | NONE | | |
| EP 0305013 | A2 | 01-03-1989 | JP | 1145501 A | 07-06-1989 |
| | | | NL | 8701980 A | 16-03-1989 |
| | | | US | 5065093 A | 12-11-1991 |
| GB 1066057 | A | 19-04-1967 | BE | 649204 A | 01-10-1964 |
| | | | NL | 6406738 A | 15-12-1964 |

EPO FORM P0459

For more details about this annex : see Official Journal of the European Patent Office, No. 12/82

**EP 2 284 478 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4563643 A